# EUROPEAN PATENT APPLICATION

(11) **EP 1 205 899 A2**
(43) Date of publication of application: **15.05.2002**
(21) Application number: 01309546.8
(22) Date of filing: 13.11.2001
(51) Int. Cl.: G09B 23/28, G09B 9/00

(54) **Simulation methods and systems for the installation and the operation of a medical image diagnostic device**

(30) Priority: 14.11.2000 JP 2000347258
(71) Applicant: GE Medical Systems Global Technology Company LLC, Waukesha, Wisconsin 53188-1696 (US)
(72) Inventor: Yoshizawa, Nobuhiro, Hino-shi, Toyko 191-8503 (JP); Tsuchiya, Tomotoshi, Hino-shi, Toyko 191-8503 (JP)
(74) Representative: Goode, Ian Roy

(57) **Abstract**

To automatically display an installing image of a medical image diagnostic device, the dimensions (width, depth and height) of an imaging room and the installing model of the medical image diagnostic device are specified (a2) in an installing parameter display region of an installation simulation Web Page screen. Then, an installing image display region automatically displays (p4,p5,p6,s2,a4,a5) installing images (bird's eye, plan and front views) when the medical image diagnostic device is installed virtually in the imaging room. When viewpoint change click points are clicked (a6,a7), the installing image displayed is updated (p8,p9,s4,a8,a9) to an installing image changing the viewpoint.

## Description

The present invention relates to an installation simulation method of a medical image diagnostic device, an operation simulation method, an imaging simulation method, systems, programs and a recording medium. More specifically, the present invention relates to an installation simulation method which can automatically display an installing image of a medical image diagnostic device, an operation simulation method which can experience in a simulated manner the operation of the medical image diagnostic device, an imaging simulation method which can experience in a simulated manner imaging of the medical image diagnostic device, systems for executing the simulation methods, programs, and a recording medium for recording them.

In general, when a large medical image diagnostic device (such as an MRI device or an X-ray CT device) is introduced into a hospital, the customer must check the size of the medical image diagnostic device in a catalog to examine whether it can be installed into the imaging room or not. When it may be installed, the customer notifies information on the dimensions (width, depth and height) the imaging room and the model to the sales person in charge of the Vendor to ask the sales person to create an installing image, and referring to-the installing image, finally decides whether it can be introduced or not.

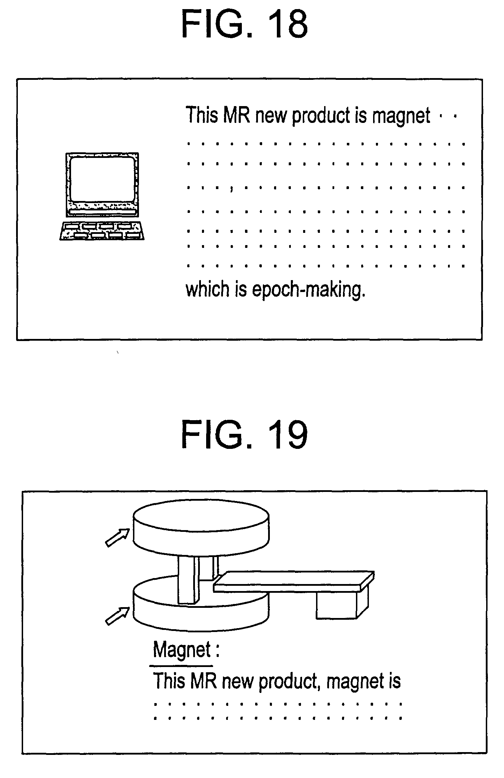

In addition, the customer browses, for example, a home page released on the Internet by the Vendor, e.g., the screen as shown in FIG. 18 to grasp the construction of the medical image diagnostic device. In the example of FIG. 18, the part "Magnet" underlined is only clicked to jump to a link destination, so as to browse the detailed description of the "Magnet", as shown in FIG. 19.

As in the related art, it is troublesome for the customer to check the size of the medical image diagnostic device to examine whether it can be installed into the imaging room or not. In addition, when the customer asks the Vendor side to create an installing image each time, considering the effort of the Vendor side and the complicated personal procedure, the customer easily has a psychological feeling of resistance.

Further, the construction or features of the medical image diagnostic device can be understood to some degree on the home page, but the operation feeling is difficult to grasp.

Furthermore, it is difficult to grasp the procedure for setting the imaging conditions of the medical image diagnostic device and what image can be obtained by imaging.

Therefore, a first object of the present invention is to provide an installation simulation method which can automatically display an installing image of a medical image diagnostic device, system, program, and a recording medium recording the same.

A second object of the present invention is to provide an operation simulation method which can experience in a simulated manner the operation of a medical image diagnostic device, system, program, and a recording medium recording the same.

A third object of the present invention is to provide an imaging simulation method which can experience in a simulated manner the imaging of a medical image diagnostic device, system, program, and a recording medium recording the same.

In a first aspect, the present invention provides an installation simulation method of a medical image diagnostic device comprising the steps of: specifying the dimensions of an installing space of a medical image diagnostic device; and generating and displaying an installing image when the medical image diagnostic device is installed virtually in the installing space.

In the installation simulation method of the first aspect, when the medical image diagnostic device can be installed in the installing space of specified dimensions, the installing image is displayed automatically.

Thus, the customer can easily obtain and evaluate the installing image without any personal procedure. Unless the installing image is displayed, the customer can readily recognize that the medical image diagnostic device cannot be installed in the installing space.

In a second aspect, the present invention provides the thus-constructed installation simulation method of a medical image diagnostic device, further comprising the steps of: displaying candidates for a medical image diagnostic device installable in the installing space; and generating an installing image of the medical image diagnostic device selected from among those candidates.

In the installation simulation method of the second aspect, only the candidates for the medical image diagnostic device installable in the installing space are displayed to leave the selection to the customer. The inconvenience of incorrectly specifying the uninstallable medical image diagnostic device can be prevented to improve the efficiency of the installing simulation.

In a third aspect, the present invention provides the thus-constructed installation simulation method of a medical image diagnostic device, wherein the installing image is at least one of a bird's eye view of the medical image diagnostic device looked down from above, a plan view of the medical image diagnostic device projected onto a plane, a front view of the medical image diagnostic device projected onto a front, a rear view of the medical image diagnostic device projected onto a rear, and a side view of the medical image diagnostic device projected onto a side.

In the installation simulation method of the third aspect, when the bird's eye view is displayed as the installing image, the placement state of the entire medical image diagnostic device in the installing space can be readily recognized.

When the plan view is displayed, the placement state of the top (or bottom) surface of the medical image diagnostic device in the ceiling (or floor) surface of the installing space can be readily recognized.

When the front view, the rear view and the side view are displayed, the placement states of the front surface, the rear surface and the side surface of the medical image diagnostic device in the installing space can be readily recognized.

In a fourth aspect, the present invention provides the thus-constructed installation simulation method of a medical image diagnostic device, wherein when a viewpoint change is instructed on the installing image, the installing image is generated again and displayed corresponding to the instruction.

The installation simulation method of the fourth aspect is useful when the installing state is observed in a field of view different from the field of view corresponding to the installing image displayed. In other words, the viewpoint change is instructed so that the installing image displayed is updated to an installing image corresponding to a desired field of view.

In a fifth aspect, the present invention provides the thus-constructed installation simulation method of a medical image diagnostic device, wherein the medical image diagnostic device is at least one of an MRI (Magnetic Resonance Imaging) device, an X-ray CT (Computed Tomography) device, an ultrasound diagnostic device, a PET (Positron Emission computed Tomography) device, an X-ray imaging device, and a CR (Computed Radiography) device.

In the installation simulation method of the fifth aspect, the installation simulation method can be preferably executed to various large medical image diagnostic devices (MRI device, X-ray CT device, PET device, X-ray imaging device and CR device). The ultrasound diagnostic device is not always a large device, but is relatively inexpensive with a wide range of uses and has many chances to change the model and to introduce a new type. The usability to execute the installation simulation method is high.

In a sixth aspect, the present invention provides an operation simulation method of a medical image diagnostic device comprising the step of generating and displaying an operation replay image replaying in a simulated manner the operation of a medical image diagnostic device corresponding to an operation request given on an image simulating an operation part of the medical image diagnostic device or an operation request given through an input device having a function equivalent to that of the operation part.

In the operation simulation method of the sixth aspect, when the operation request is given through an image simulating the operation part or the input device, the operation replay image corresponding thereto is displayed. The operation of the medical image diagnostic device can be experienced in a simulated manner without using an actual medical image diagnostic device. Thus, it is possible to easily perform evaluation of operativity or practice of the operation at low cost.

In a seventh aspect, the present invention provides the thus-constructed operation simulation method of a medical image diagnostic device, wherein the operation of the medical image diagnostic device is replayed by reducing time.

In the operation simulation method of the seventh aspect, time required for the operation simulation can be saved to improve the efficiency.

In an eighth aspect, the present invention provides an imaging simulation method of a medical image diagnostic device comprising the step of displaying a medical image obtained when imaging of a medical image diagnostic device is performed virtually corresponding to an imaging request given on an image simulating an operation part of the medical image diagnostic device or an imaging request given through an input device having a function equivalent to that of the operation part.

In the imaging simulation method of the eighth aspect, when the imaging request is given through an image simulating the operation part or an input device, the medical image is displayed as imaged virtually. Imaging of the medical image diagnostic device can be experienced in a simulated manner without using an actual medical image diagnostic device. Thus, it is possible to exactly recognize a procedure for setting the imaging conditions or a medical image obtained by imaging.

In a ninth aspect, the present invention provides the thus-constructed imaging simulation method, wherein the medical image is selected from among a plurality of dummy images previously prepared.

In the imaging simulation method of the ninth aspect, the optimum medical image is selected from among a plurality of dummy images to be displayed. Complicated image generation computing is unnecessary, so that the medical image can be readily displayed.

In a tenth aspect, the present invention provides an installation simulation system of a medical image diagnostic device comprising: a customer side terminal; a host server device, and a network for connecting the customer side terminal to the host server device, wherein when the dimensions of an installing space of a medical image diagnostic device are specified by an operator, the customer side terminal sends the dimensions of the installing space through the network to the host server device, and wherein the host server device (or an arithmetic unit connected thereto) generates an installing image when the medical image diagnostic device is installed virtually in the installing space to send the installing image through the network to the customer side terminal, and displays the installing image on the screen of the customer side terminal.

The installation simulation system of the tenth aspect can preferably execute the installation simulation method of the first aspect.

In an eleventh aspect, the present invention provides an operation simulation system of a medical image diagnostic device comprising: a customer side terminal; a host server device, and a network for connecting the customer side terminal to the host server device, wherein the customer side terminal sends, through the network to the host server device, an operation request given on an image simulating an operation part of a medical image diagnostic device or an operation request given through an input device having a function equivalent to that of the operation part, and wherein the host server device (or an arithmetic unit connected thereto) generates an operation replay image replaying in a simulated manner the operation of a medical image diagnostic device corresponding to the operation request to send the operation replay image through the network to the customer side terminal, and displays the operation replay image on the screen of the customer side terminal.

The operation simulation system of the eleventh aspect can preferably execute the operation simulation method of the sixth aspect.

In a twelfth aspect, the present invention provides an imaging simulation system of a medical image diagnostic device comprising: a customer side terminal; a host server device, and a network for connecting the customer side terminal to the host server device, wherein the customer side terminal sends, through the network to the host server device, an imaging request given on an image simulating an operation part of a medical image diagnostic device or an imaging request given through an input device having a function equivalent to that of the operation part, and wherein the host server device (or an arithmetic unit connected thereto) sends, through the network to the customer side terminal, a medical image obtained when the medical image diagnostic device virtually performs imaging corresponding to the imaging request to display the medical image on the screen of the customer side terminal.

The imaging simulation system of the twelfth aspect can preferably execute the imaging simulation method of the eighth aspect.

In a thirteenth aspect, the present invention provides an installation simulation program of a medical image diagnostic device which describes, in a code form executed by a computer, a dimension input step for inputting the dimensions of an installing space of a medical image diagnostic device, an installing image generation step for generating an installing image when the medical image diagnostic device is installed virtually in the installing space, and an installing image display step for displaying the installing image.

The installation simulation program of the thirteenth aspect can preferably execute the installation simulation method of the first aspect.

In a fourteenth aspect, the present invention provides an operation simulation program of a medical image diagnostic device which describes, in a code form executed by a computer, an operation request reception step for receiving an operation request given on an image simulating an operation part of a medical image diagnostic device or an operation request given through an input device having a function equivalent to that of the operation part, an operation replay image generation step for generating an operation replay image replaying in a simulated manner the operation of a medical image diagnostic device corresponding to the operation request, and an operation replay image display step for displaying the operation replay image.

The operation simulation program of the fourteenth aspect can preferably execute the operation simulation method of the sixth aspect.

In a fifteenth aspect, the present invention provides an imaging simulation program of a medical image diagnostic device which describes, in a code form executed by a computer, an imaging request reception step for receiving an imaging request given on an image simulating an operation part of a medical image diagnostic device or an imaging request given through an input device having a function equivalent to that of the operation part, and a medical image display step for displaying a medical image obtained when the medical image diagnostic device virtually performs imaging corresponding to the imaging request.

The imaging simulation program of the fifteenth aspect can preferably execute the imaging simulation method of the eighth aspect.

In a sixteenth aspect, the present invention provides a recording medium recording at least one of the thus-constructed installation simulation program, the thus-constructed operation simulation program, and the thus-constructed imaging simulation program.

The recording medium of the sixteenth aspect can preferably execute the installation simulation methods of the first, sixth and eighth aspects.

According to the installation simulation method, system, program, and recording medium of the present invention, an installing image showing a state where a medical image diagnostic device is installed in an installing space of the specified dimensions can be displayed automatically.

In addition, according to the operation simulation method, system, program, and recording medium of the present invention, an image simulating an operation part or an input device is used to experience in a simulated manner the operation of a medical image diagnostic device.

Further, according to the imaging simulation method, system, program, and recording medium of the present invention, an image simulating an operation part or an input device is used to experience in a simulated manner the imaging of a medical image diagnostic device.

Further objects and advantages of the present invention will be apparent from the following description of the preferred embodiments of the invention as illustrated in the accompanying drawings, in which:
FIG. 1 is a block diagram showing an installation simulation system of a medical image diagnostic device according to a first embodiment;
FIG. 2 is a block diagram of the host server device and the arithmetic unit in the installation simulation system of FIG. 1;
FIG. 3 is a flowchart showing an installation simulation processing;
FIG. 4 is a flowchart continuing from FIG. 3;
FIG. 5 is an illustration of an installation simulation Web Page screen;
FIG. 6 is an explanatory view showing a method for specifying installing parameters;
FIG. 7 is an illustration of an error message screen;
FIG. 8 is another illustration of the installation simulation Web Page screen;
FIG. 9 is a block diagram of a host server device and an arithmetic unit of an operation/imaging simulation system according to a second embodiment;
FIG. 10 is a flowchart showing an operation/imaging simulation processing;
FIG. 11 is a flowchart continuing from FIG. 10;
FIG. 12 is an illustration of an operation simulation Web Page screen;
FIG. 13 is another illustration of the operation simulation Web Page screen;
FIG. 14 is an illustration of a time reduction scaling factor adjust screen;
FIG. 15 is an illustration of an operation simulation Web Page screen;
FIG. 16 is another illustration of the operation simulation Web Page screen;
FIG. 17 is a block diagram showing a notebook computer and a CD-ROM according to a third embodiment;
FIG. 18 is an explanatory view showing a prior art explanation screen of a medical image diagnostic device; and
FIG. 19 is an explanatory view showing a detailed explanation screen to be linked from the explanation screen of FIG. 18.

The present invention will be described in detail by the illustrated embodiments.

### First Embodiment

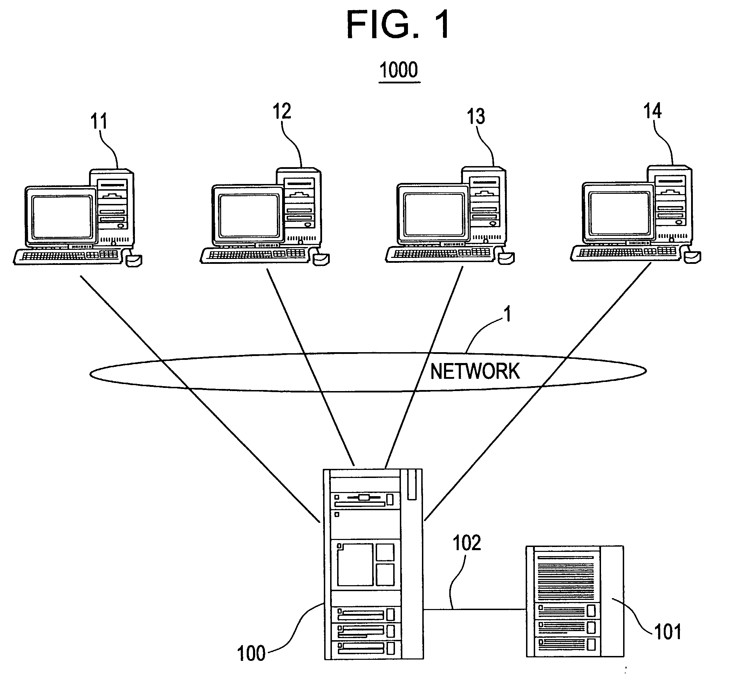

FIG. 1 is a block diagram showing an installation simulation system 1000 of a medical image diagnostic device according to a first embodiment of the present invention.

The installation simulation system 1000 has a network 1 such as Internet, LAN (Local Area Network), and WAN (Wide Area Network), customer side terminals 11, 12, 13 and 14 connected to the network 1 (which may be located in the same or different place), a host server device 100, and an arithmetic unit 101. The host server device 100 is connected to the arithmetic unit 101 through a communication line 102 such as LAN. The customer side terminals 11 to 14 are, for example, personal computers installing Web Browser. As the Web Browser, Internet Explorer (manufactured by Microsoft Corporation) and Netscape Navigator (manufactured by Netscape Communications Corporation) are widespread.

When the network 1 is Internet, a large number of terminals other than the customer side terminals 11 to 14 are also connected to the network 1.

When the security is emphasized, SSL (Secure Socket Layer Protocol) and the like are preferably used.

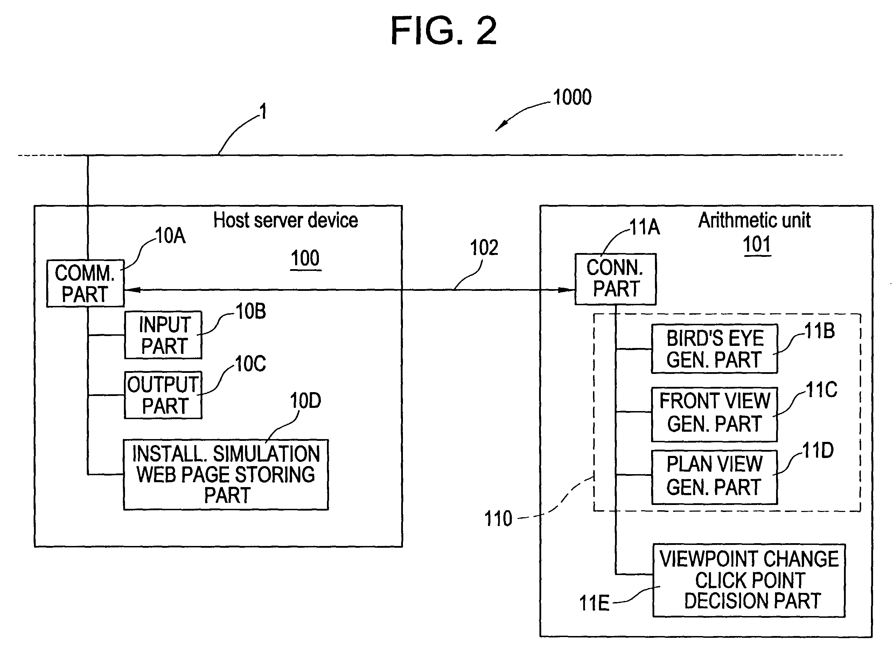

FIG. 2 is a block diagram of the host server device 100 and the arithmetic unit 101.

The host server device 100 has a communication part 10A, an input part 10B, an output part 10C, and an installation simulation Web Page storing part 10D for storing an installation simulation Web Page browsed by a customer, and is operated under control of a Web Page manage program. The recording medium of the installation simulation Web Page storing part 10D is, for example, a hard disk.

The arithmetic unit 101 has a connection part 11A, an installing image generation part 110, and a viewpoint change click point decision part 11E, and is operated under control of an installation simulation manage program. The installing image generation part 110 has a bird's eye view generation part 11B, a front view generation part 11C, and a plan view generation part 11D. The "bird's eye view", the "front view", and the "plan view" are state explanation views of the medical image diagnostic device viewed from the respective directions when the medical image diagnostic device is installed virtually in the imaging room. The "viewpoint change click point" is a point for specifying the viewpoint position and the line of sight for viewing the medical image diagnostic device.

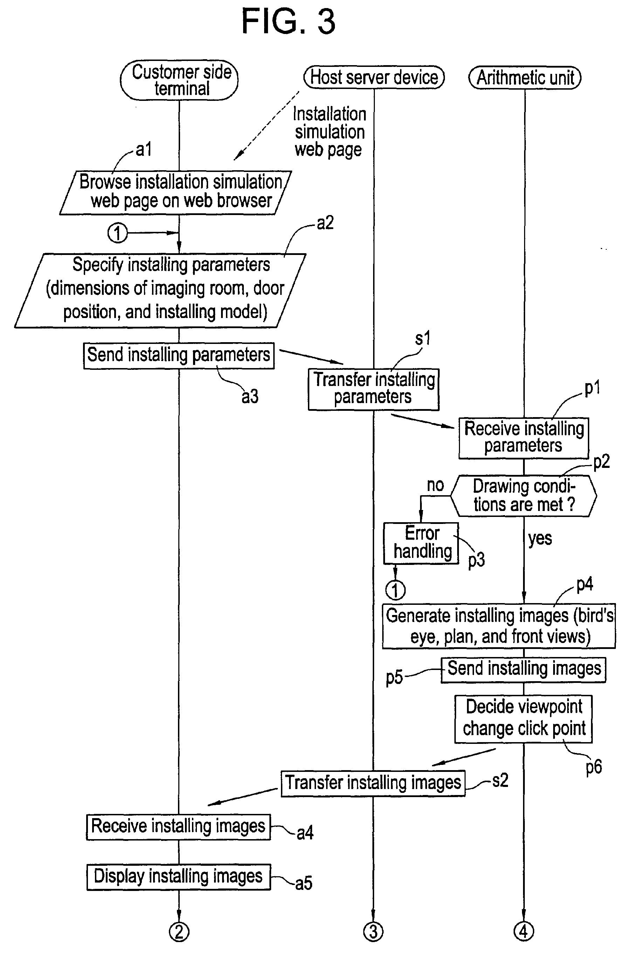

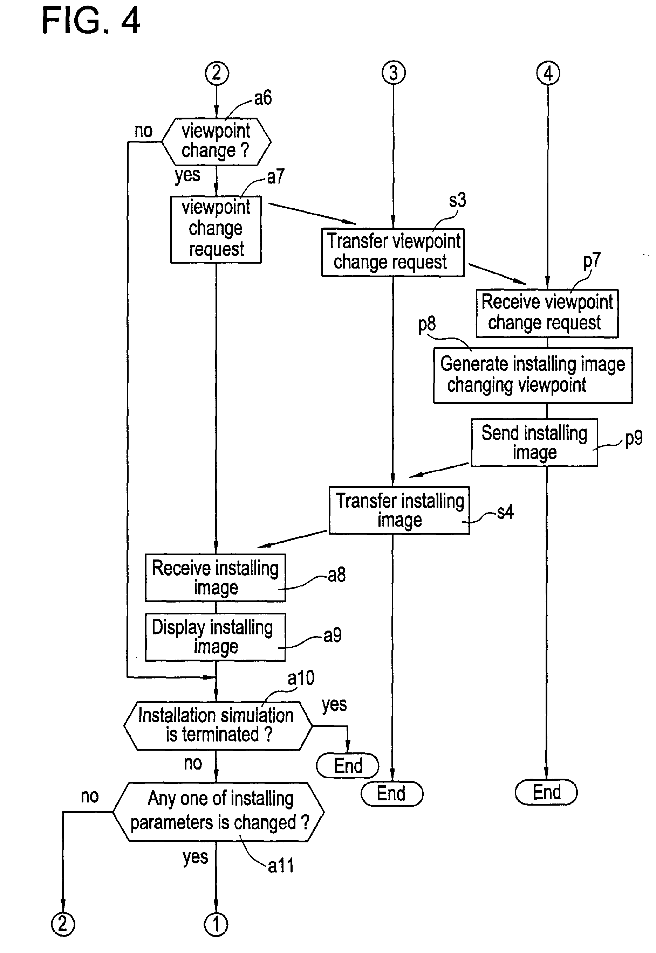

FIGS. 3 and 4 are flowcharts showing the installation simulation processing of the medical image diagnostic device. The left side flow is a flow of a customer side terminal (envisaging the customer side terminal 11). The middle flow is a flow of the host server device 100. The right side flow is a flow of the arithmetic unit 101.

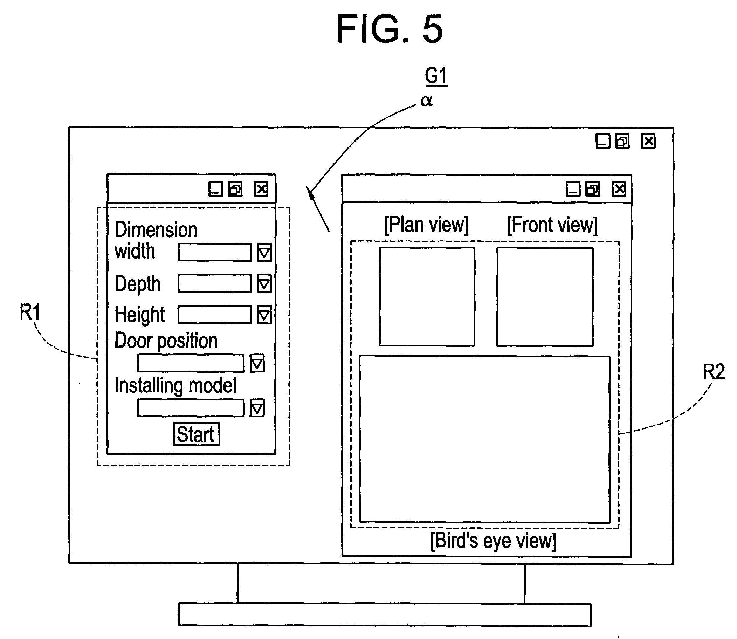

In step a1, the operator (customer) of the customer side terminal 11 accesses the host server device 100 through the network 1, and then, browses the installation simulation Web Page on the Web Browser. For example, as shown in the installation simulation Web Page screen G1 of FIG. 5, there is displayed a screen having an installing parameter display region R1 for specifying the dimensions of the imaging room, the door position, and the installing model of the medical image diagnostic device, and an installing image display region R2 for displaying an installing image when the medical image diagnostic device is installed virtually in the imaging room. The position of cursor α can optionally be moved by operation of a pointing device such as a mouse.

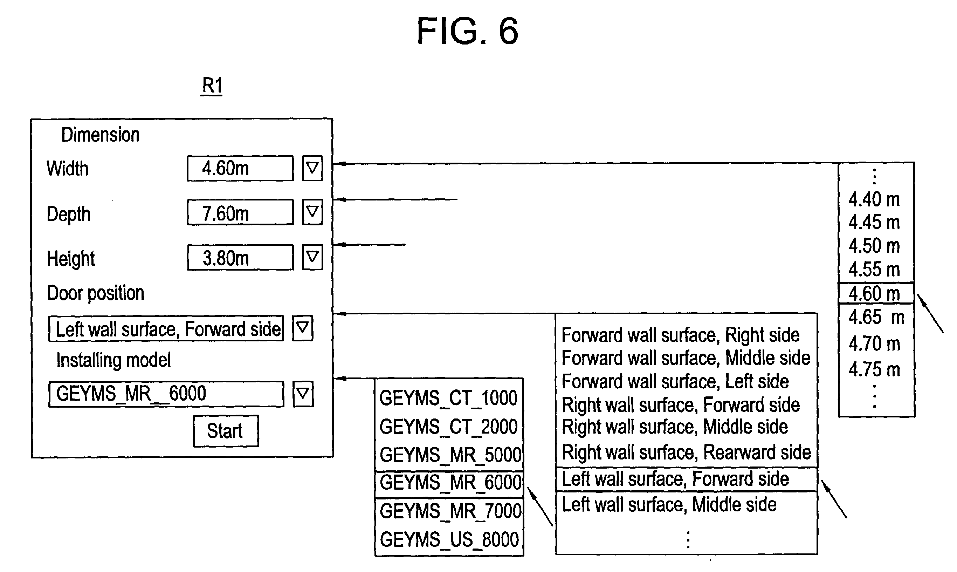

In step a2, the operator specifies installing parameters on the installation simulation Web Page screen G1. For example, as shown in the installing parameter display region R1 of FIG. 6, desired installing parameters are selected from the candidates displayed in a pull-down menu form. The illustration is an example in which "4.60m", "7.60m", and "3.80m" are selected as the width, depth, and height of the imaging room, "left wall surface, forward side" is selected as the door position, and "GEYMS_MR_6000" (the model name of the MRI device) is selected as the installing model. As the installing model other than the MRI device, for example, an X-ray CT device, an ultrasound diagnostic device, a PET device, an X-ray imaging device, or a CR device can be selected.

In step a3, the installing parameters are sent through the network 1 to the host server device 100.

In step s1, the host server device 100 transfers the installing parameters through the communication line 102 to the arithmetic unit 101.

In step p1, the arithmetic unit 101 receives the installing parameters.

In step p2, the arithmetic unit 101 judges whether the drawing conditions are met or not. When the drawing conditions are met, the routine is advanced to step p4. When the drawing conditions are not met, the routine is advanced to step p3. In other words, when the medical image diagnostic device as the installing model specified in the step a2 can be installed in the imaging room (by leaving the specified margin space), it is judged that the drawing conditions are met. When the medical image diagnostic device lies off the imaging room or the margin space is insufficient, it is judged that the drawing conditions are not met.

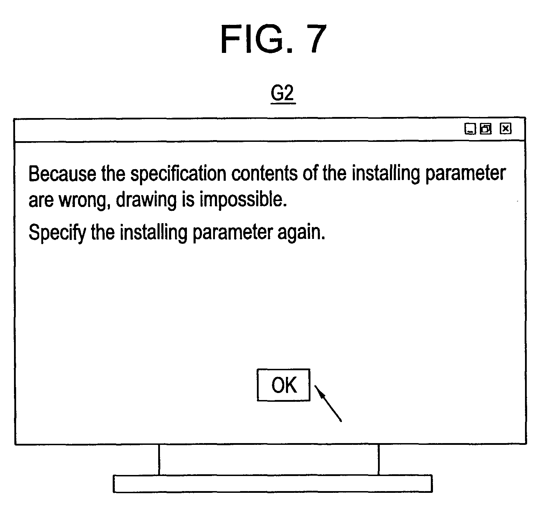

In step p3, error handling is performed. For example, as shown in the error message screen G2 of FIG. 7, the message "Because the specification contents of the installing parameter are wrong, drawing is impossible. Specify the installing parameter again." is displayed.

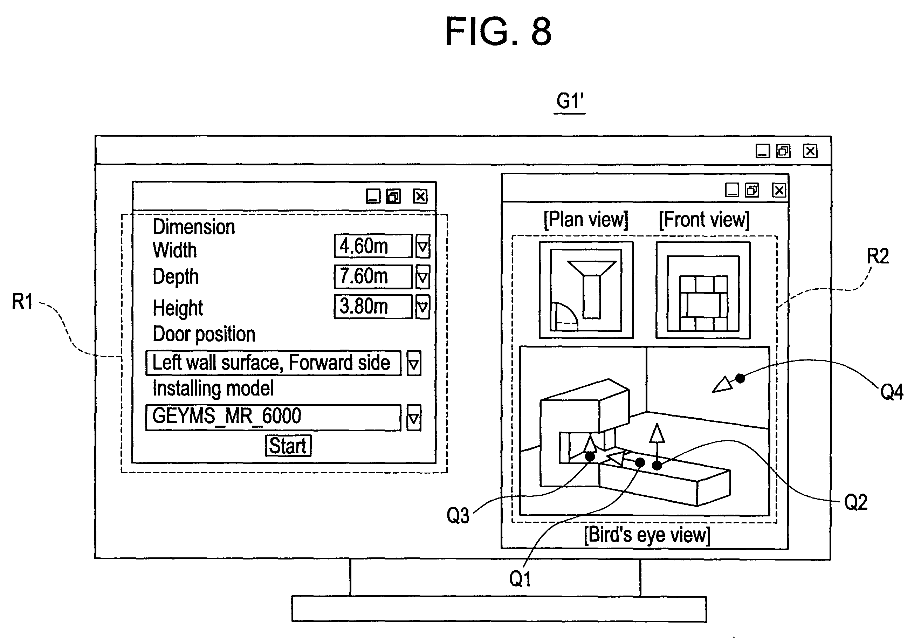

In step p4, the arithmetic unit 101 generates installing images. That is, in the arithmetic unit 101, the bird's eye view generation part 11B generates a bird's eye view, the front view generation part 11C generates a front view, and the plan view generation part 11D generates a plan view. The viewpoint of the bird's eye view is the standard eye position of a human standing in the door position (for example, a height of 150cm from the floor surface). The specific example of the installing images will be described later with reference to FIG. 8.

In step p5, the position and the line of sight of the viewpoint change click points (Q1 to Q4 of FIG. 8) drawn into the bird's eye view are decided.

In step p6, the installing images are sent through the communication line 102 to the host server device 100.

In step s2, the host server device 100 transfers the installing images through the network 1 to the customer side terminal 11.

In step a4, the customer side terminal 11 receives the installing images.

In step a5, the installing image display region R2 of the installation simulation Web Page screen G1 displays the bird's eye view, the plan view and the front view (generally, the table inserting side surface viewed from the Magnet is regarded as the front) as the installing images. Instead of or besides these installing images, the rear view or the side view may be displayed. The plan view may include an operation room adjacent to the imaging room (a room for installing the console of the medical image diagnostic device).

FIG. 8 illustrates an installation simulation Web Page screen G1' displaying the installing images. In the illustrated example, into the bird's eye view, there are drawn the viewpoint change click point Q1 corresponding to the field of view looking into a bore (a hollow in a gantry inserting a subject), the viewpoint change click point Q2 corresponding to the field of view of the subject placed on the top of the table, the viewpoint change click point Q3 corresponding to the field of view in the bore, and the viewpoint change click point Q4 corresponding to the field of view looked down from above in a slanting direction. A link is provided in the respective components (the Magnet, table and so on) in the installing image. When the position of the cursor α is matched with the component, the function or PR (Public Relations) point may be displayed by a pop-up form or a jump to other page.

In step a6, the customer side terminal 11 judges whether any one of the viewpoint change click points is clicked by the operator or not. When the viewpoint change click point is clicked, the routine is advanced to step a7. Otherwise, the routine is advanced to step a10.

In step a7, a viewpoint change request is sent through the network 1 to the host server device 100.

In step s3, the host server device 100 transfers the viewpoint change request through the communication line 102 to the arithmetic unit 101.

In step p7, the arithmetic unit 101 receives the viewpoint change request.

In step p8, the installing image corresponding to the viewpoint change click point (any one of the Q1 to Q4) specified by the operator is generated again.

In step p9, the installing image is sent through the communication line 102 to the host server device 100. In this case, when only the bird's eye view is changed and the plan view and the front view are not changed, only the bird's eye view may be sent.

In step s4, the host server device 100 transfers the bird's eye view through the network 1 to the customer side terminal 11.

In step a8, the customer side terminal 11 receives the installing image.

In step a9, the installing image display region R2 of the installation simulation Web Page screen G1 displays the received installing image.

In step a10, when the installation simulation is terminated, the installation simulation processing is terminated. When the installation simulation is to be continued, the routine is advanced to a11.

In step a11, when any one of the installing parameters is to be changed, the routine is returned to the step a2. In this case, the change of the installing parameter is reflected on the installation simulation Web Page screen G1 to switch the display contents of the installing image of the installing image display region R2. When the installing parameter is not to be changed, the routine is returned to the step a6.

In the step a2, the installing model field of the installing parameter display region R1 of the installation simulation Web Page screen G1 may display only the installing model installable in the imaging room of the specified dimensions in a pull-down menu form. In this case, the customer can readily recognize the installable installing model to quickly judge whether it can be installed or not. It is possible to prevent the error handling in the step p3 due to selection of an undrawable installing model.

According to the installation simulation system 1000 of the medical image diagnostic device of the first embodiment, the customer simply specifies the model for the installation simulation and the dimensions of the imaging room on the installation simulation Web Page screen G1 displayed on the customer's own terminal (the numerals 11 to 14 of FIG. 1), thereby obtaining an installing image. For example, it is possible to calmly judge without easily having a psychological feeling of resistance whether the medical image diagnostic device manufactured by a competing vendor can be installed or not.

Since the installing image when the installing parameter is changed can be readily obtained, it is possible to easily perform comparison of the installing images for each model or evaluation of the installing state when the ceiling height or width of the imaging room is increased or decreased.

Since the Vendor does not need to manually create an installing image, the cost (labor cost) can be saved.

### Second Embodiment

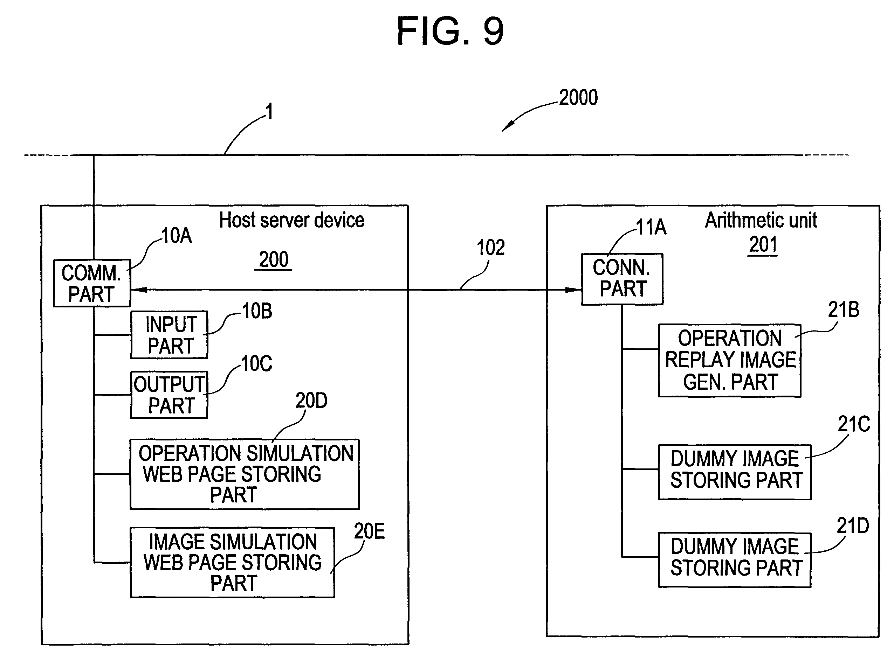

FIG. 9 is a block diagram of a host server device 200 and an arithmetic unit 201 of an operation/imaging simulation system 2000 of a medical image diagnostic device according to a second embodiment of the present invention. The block diagram of the entire operation/imaging simulation system 2000 is similar to that of the installation simulation system 1000 of FIG. 1, and the illustration thereof is omitted.

The host server device 200 has a communication part 10A, an input part 10B, an output part 10C, an operation simulation Web Page storing part 20D for storing an operation simulation Web Page browsed by a customer, and an imaging simulation Web Page storing part 20E for storing an imaging simulation Web Page browsed by a customer, and is operated under control of a Web Page manage program.

The arithmetic unit 201 has a connection part 11A, an operation replay image generation part 21B for generating an image replaying the operation when the medical image diagnostic device is operated virtually, a dummy image storing part 21D for storing a dummy image of Pulse Sequence Design or for each scan parameter, and a dummy image selection part 21D for selecting the dummy image closest to an image expected to be generated by virtual imaging instructed by the operator, and is operated under control of an operation/imaging simulation manage program.

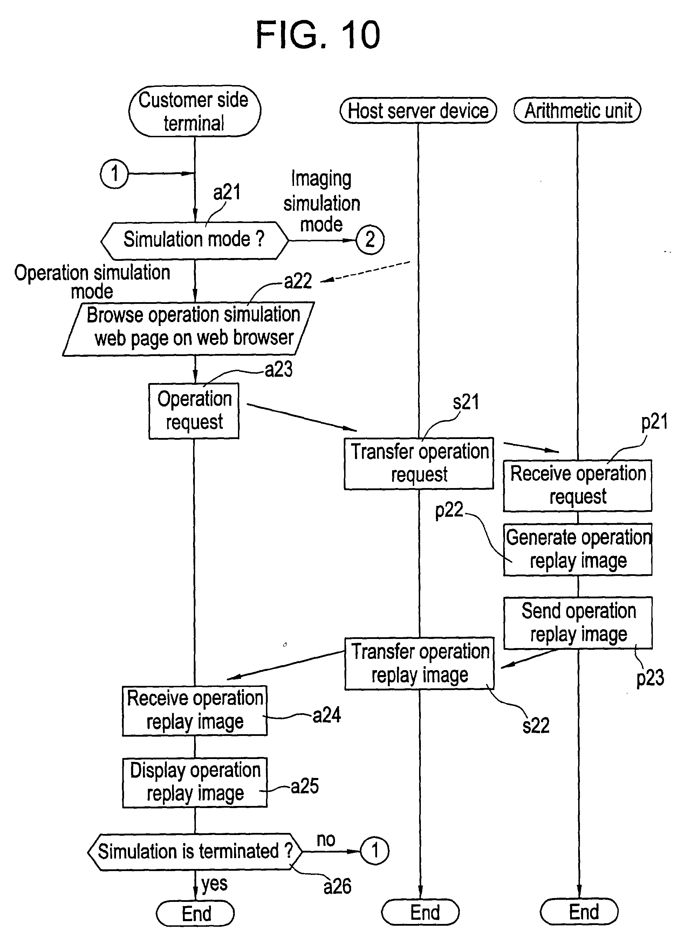

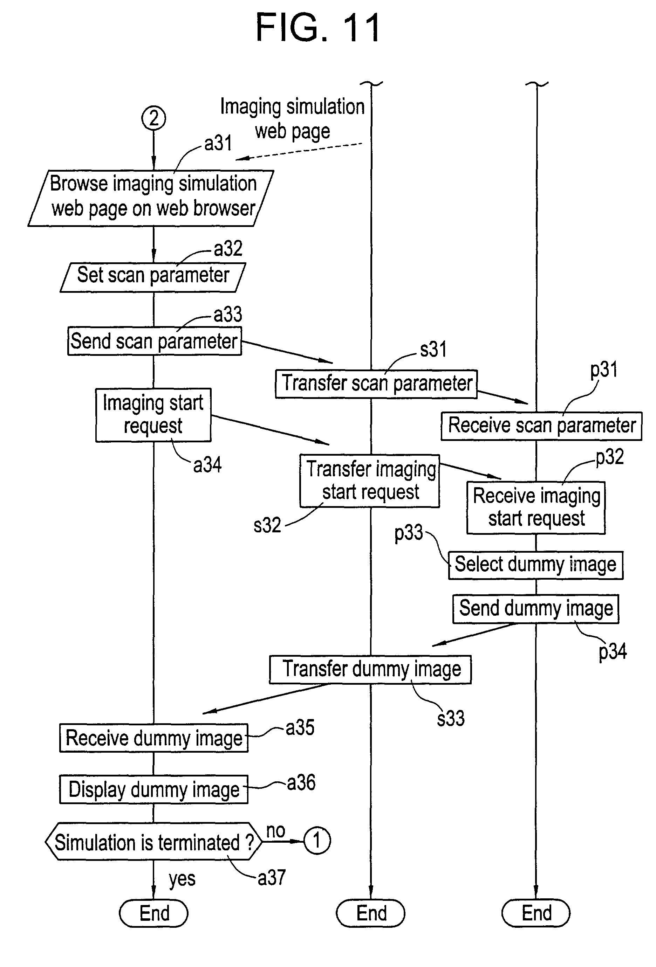

FIGS. 10 and 11 are flowcharts showing the operation/imaging simulation processing of the medical image diagnostic device. The left side flow is a flow of the customer side terminal. The middle flow is a flow of the host server device 200. The right side flow is a flow of the arithmetic unit 201.

In step a21, the processing is branched corresponding to the simulation mode specified by the operator of the customer side terminal. In other words, when the operation simulation mode for virtually operating the medical image diagnostic device is specified, the routine is advanced to step a22. When the imaging simulation mode for performing virtual imaging is specified, the routine is advanced to step a31.

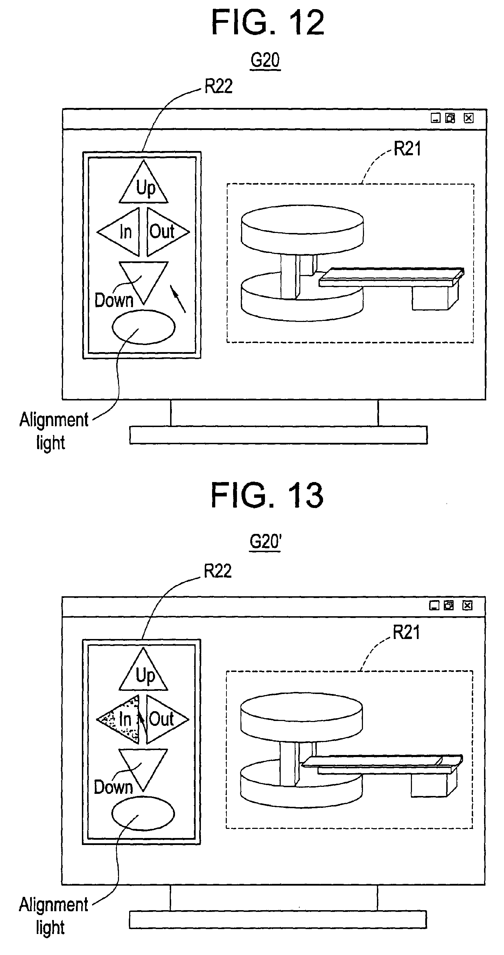

In step a22, the operator of the customer side terminal accesses the host server device 200 through the network 1 to browse the operation simulation Web Page on the Web Browser. For example, as shown in the operation simulation Web Page screen G20 of FIG. 12, there is displayed a screen having an operation replay image display region R21 for displaying the MRI device for the operation simulation, and an operation switch display region R22 for displaying in a simulated manner the operation switch of the MRI device. In the illustrated example, the operation switch display region R22 displays "Up" button for raising the table (and the table top), "Down" button for lowering the table, "In" button for moving the table top in the direction inserting the same into the Magnet device, "Out" button for moving the table top in the direction removing the same from the Magnet device, and "Alignment Light" button for turning on/out a light for positioning a subject. The size and design of the respective buttons are preferably the same as those of an actual object where possible in view of closing the operating feeling to the actual object (which may be different from those of the actual object due to the screen region and so on).

In step a23, when any one of the operation buttons of the operation switch display region R22 of the installation simulation Web Page screen G20 is clicked by the operator, an operation request is sent through the network 1 to the host server device 200.

In step s21, the host server device 200 transfers the operation request through the communication line 102 to the arithmetic unit 201.

In step p21, the arithmetic unit 201 receives the operation request.

In step p22, the operation replay image generation part 21B of the arithmetic unit 201 generates an operation replay image corresponding to the operation request.

In step p23, the operation replay image is displayed through the communication line 101 to the host server device 200.

In step s22, the host server device 200 transfers the operation replay image through the network 1 to the customer side terminal.

In step a24, the customer side terminal receives the operation replay image.

In step a25, the operation replay image display region of the operation simulation Web Page screen displays the operation replay image. For example, as shown in the operation simulation Web Page screen G20' of FIG. 13, when the "In" button of the operation switch display region R22 of the operation switch display region R22 is clicked, the operation replay image display region R21 displays a moving image in which the table top of the MRI device is moved in the direction inserting the same into the Magnet device. It depends on the model of the medical image diagnostic device whether the table is advanced only during depression of the button or the table is advanced to the limiting point when the button is pressed once and the hand is left from the button. In view of closing the operating feeling to the actual object, the model of the medical image diagnostic device is preferably the same as that of the operation simulation (depression of the pointing device button is equivalent to the depression of the button of the actual object).

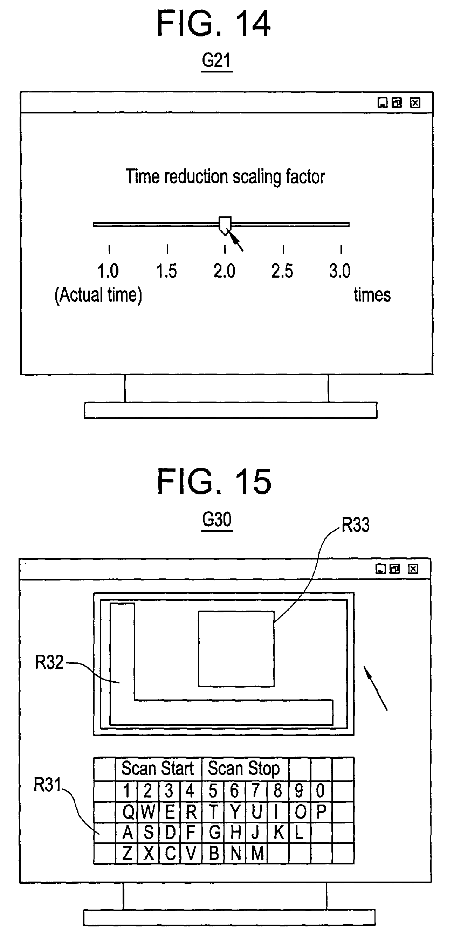

The table top moving speed may be matched with the actual moving speed, but it may be displayed by reducing the actual time. In that case, for example, as shown in the time reduction scaling factor adjust screen G21 of FIG. 14, the adjust knob is slid to preferably vary the time reduction scaling factor.

In step a26, when the simulation is terminated, the operation/imaging simulation processing is terminated. When the simulation is continued (either the operation simulation or the imaging simulation is continued), the routine is returned to the step a21.

In step a31, the operator of the customer side terminal accesses the host server device 200 through the network 1 to browse the imaging simulation Web Page on the Web Browser. For example, as shown in the operation simulation Web Page screen G30 of FIG. 15, there is displayed an image having a console display region R31 for displaying in a simulated manner the console (keyboard) of the MRI device, a scan parameter display region R32 for displaying a scan parameter, and a dummy image display region R33 for displaying a dummy image.

When the keyboard of the customer side terminal is used for input, the image of the console display region R31 can be omitted (only the function buttons allocated to the function keys may be displayed on the screen). When an input device such as a track ball is attached to the actual MRI device, it is also preferably displayed operatively on the screen. An image simulating an LED (Light-Emitting Diode) display indicating the table top position may be further displayed.

In step a32, the operator performs button operation on the console display region R31 of the imaging simulation Web Page screen G30 by mouse operation to set a scan parameter required for imaging. The scan parameter is reflected to the scan parameter display region R32.

In step a33, the customer side terminal sends the scan parameter through the network 1 to the host server device 200.

In step s31, the host server device 200 transfers the scan parameter through the communication line 102 to the arithmetic unit 201.

In step p31, the arithmetic unit 201 receives the scan parameter.

In step a34, when the operator clicks the "Scan Start" button of the console display region R31 of the operation simulation Web Page screen G30, an imaging start request is sent through the network 1 to the host server device 200.

In step s32, the host server device 200 transfers the imaging start request through the communication line 102 to the arithmetic unit 201.

In step p32, the arithmetic unit 201 receives the imaging start request.

In step p33, the dummy image selection part 21D of the arithmetic unit 201 analyzes the scan parameter, and selects the dummy image closest to the image expected to be generated when the imaging is performed virtually.

In step p34, the arithmetic unit 201 sends the selected dummy image through the communication line 102 to the host server device 200.

In step s33, the host server device 200 transfers the dummy image through the network 1 to the customer side terminal.

In step a35, the customer side terminal receives the dummy image.

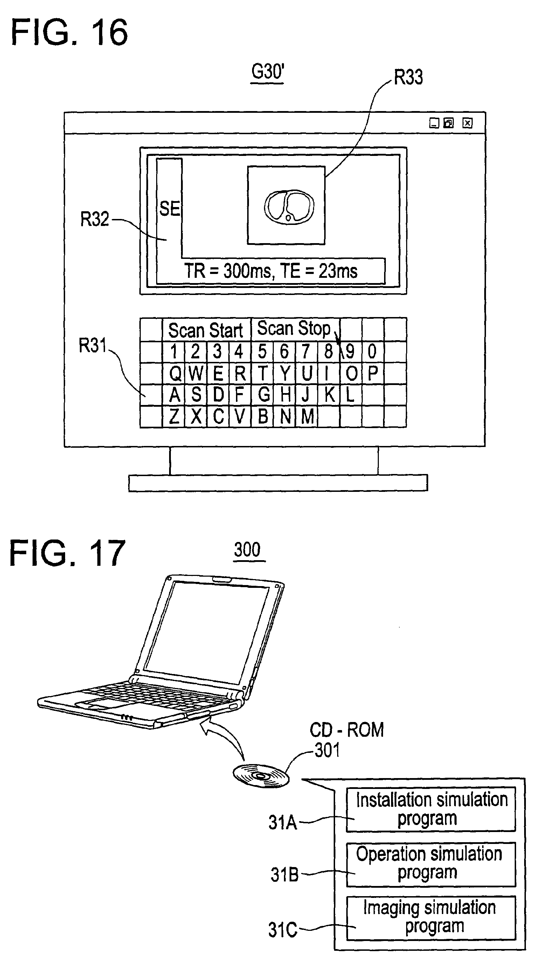

In step a36, the operation replay image display region of the imaging simulation Web Page screen displays the operation replay image. For example, as shown in the imaging simulation Web Page screen G30' of FIG. 16, the dummy image display region R33 displays the dummy image.

In step a37, when the simulation is to be terminated, the operation/imaging simulation processing is terminated. When the simulation is to be continued (either the operation simulation or the imaging simulation is continued), the routine is returned to the step a21.

When there are a plurality of models of the medical image diagnostic device capable of performing operation/imaging simulation, the model name selected by the operator from the candidates displayed in, e.g., a pull-down menu form is preferably displayed on the operation simulation Web Page screens G20 and G20' (see FIGS. 12 and 13) and the imaging simulation Web Page screens G30 and G30' (see FIGS. 15 and 16).

According to the operation/imaging simulation system 2000 of the medical image diagnostic device of the second embodiment, the customer can experience in a simulated manner the operation or imaging of the medical image diagnostic device on the operation simulation Web Page screen G20 or the operation simulation Web Page screen G30 displayed on the customer's own terminal (the numerals 11 to 14 of FIG. 1) to intuitively evaluate whether the operativity is good or not.

### Third Embodiment

FIG. 17 is a block diagram showing a notebook computer 300 and a CD-ROM (Compact Disk - Read Only Memory) 301 according to a third embodiment of the present invention.

The CD-ROM 301 records an installation simulation program 31A, an operation simulation program 31B, and an imaging simulation program 31C.

The installation simulation program 31A describes, in an execution code form of the notebook computer 300, a dimension input step for inputting the dimensions of the installing space of the medical image diagnostic device such as an MRI device, an installing image generation step for generating an installing image when the medical image diagnostic device is installed virtually in the installing space, and an installing image display step for displaying the installing image. In other words, the notebook computer 300 executes the installation simulation program 31A so as to perform the installation simulation according to the first embodiment in the stand-alone environment.

The operation simulation program 31B describes, in an execution code form of the notebook computer 300, an operation request reception step for receiving an operation request given on an image simulating an operation part of a medical image diagnostic device or an operation request given through an input device having a function equivalent to that of the operation part, an operation replay image generation step for generating an operation replay image replaying in a simulated manner the operation of the medical image diagnostic device corresponding to the operation request, and an operation replay image display step for displaying the operation replay image. In other words, the notebook computer 300 executes the operation simulation program 31B so as to perform the operation simulation according to the second embodiment in the stand-alone environment.

The imaging simulation program 31C describes, in an execution code form of the notebook computer 300, an imaging request reception step for receiving an imaging request given on an image simulating an operation part of a medical image diagnostic device or an imaging request given through an input device having a function equivalent to that of the operation part, and a medical image display step for displaying a medical image obtained when the medical image diagnostic device virtually performs imaging corresponding to the imaging request. In other words, the notebook computer 300 executes the imaging simulation program 31C so as to perform the imaging simulation according to the second embodiment in the stand-alone environment.

According to the notebook computer 300 and the CD-ROM 301 according to the third embodiment, it is possible to perform the installation/operation/imaging simulation of the first and second embodiments in the stand-alone environment. For example, when the sales person in charge goes to the customer for sales activity, the sales person in charge can convincingly present the installability and operativity of the medical image diagnostic device.

In place of the CD-ROM 301, a portable recording medium such as FD (Floppy Disk), MO (Magneto-Optical) disk, DVD (Digital Versatile Disk), or PD (Phase-change Disk) may be used. The built-in hard disk of the notebook computer 300 may install the installation/operation/imaging simulation programs 31A, 31B and 31C (in this case, it is unnecessary to read the respective programs from the portable recording medium).

## Claims

1. An installation simulation method of a medical image diagnostic device comprising the steps of:
specifying the dimensions of an installing space of a medical image diagnostic device; and
generating and displaying an installing image when the medical image diagnostic device is installed virtually in the installing space.

2. An operation simulation method of a medical image diagnostic device comprising the step of generating and displaying an operation replay image replaying in a simulated manner the operation of a medical image diagnostic device corresponding to an operation request given on an image simulating an operation part of the medical image diagnostic device or an operation request given through an input device having a function equivalent to that of the operation part.

3. An imaging simulation method of a medical image diagnostic device comprising the step of displaying a medical image obtained when imaging of a medical image diagnostic device is performed virtually corresponding to an imaging request given on an image simulating an operation part of the medical image diagnostic device or an imaging request given through an input device having a function equivalent to that of the operation part.

4. An installation simulation system of a medical image diagnostic device comprising: a customer side terminal; a host server device; and a network for connecting the customer side terminal to the host server device,
wherein when the dimensions of an installing space of a medical image diagnostic device are specified by an operator, the customer side terminal sends the dimensions of the installing space through the network to the host server device, and
wherein the host server device (or an arithmetic unit connected thereto) generates an installing image when the medical image diagnostic device is installed virtually in the installing space to send the installing image through the network to the customer side terminal, and displays the installing image on the screen of the customer side terminal.

5. An operation simulation system of a medical image diagnostic device comprising: a customer side terminal; a host server device; and a network for connecting the customer side terminal to the host server device,
wherein the customer side terminal sends, through the network to the host server device, an operation request given on an image simulating an operation part of a medical image diagnostic device or an operation request given through an input device having a function equivalent to that of the operation part, and
wherein the host server device (or an arithmetic unit connected thereto) generates an operation replay image replaying in a simulated manner the operation of a medical image diagnostic device corresponding to the operation request to send the operation replay image through the network to the customer side terminal, and displays the operation replay image on the screen of the customer side terminal.

6. An imaging simulation system of a medical image diagnostic device comprising: a customer side terminal; a host server device; and a network for connecting the customer side terminal to the host server device,
wherein the customer side terminal sends, through the network to the host server device, an imaging request given on an image simulating an operation part of a medical image diagnostic device or an imaging request given through an input device having a function equivalent to that of the operation part, and
wherein the host server device (or an arithmetic unit connected thereto) sends, through the network to the customer side terminal, a medical image obtained when the medical image diagnostic device virtually performs imaging corresponding to the imaging request to display the medical image on the screen of the customer side terminal.

7. An installation simulation program of a medical image diagnostic device which describes, in a code form executed by a computer, a dimension input step for inputting the dimensions of an installing space of a medical image diagnostic device, an installing image generation step for generating an installing image when the medical image diagnostic device is installed virtually in the installing space, and an installing image display step for displaying the installing image.

8. An operation simulation program of a medical image diagnostic device which describes, in a code form executed by a computer, an operation request reception step for receiving an operation request given on an image simulating an operation part of a medical image diagnostic device or an operation request given through an input device having a function equivalent to that of the operation part, an operation replay image generation step for generating an operation replay image replaying in a simulated manner the operation of a medical image diagnostic device corresponding to the operation request, and an operation replay image display step for displaying the operation replay image.

9. An imaging simulation program of a medical image diagnostic device which describes, in a code form executed by a computer, an imaging request reception step for receiving an imaging request given on an image simulating an operation part of a medical image diagnostic device or an imaging request given through an input device having a function equivalent to that of the operation part, and a medical image display step for displaying a medical image obtained when the medical image diagnostic device virtually performs imaging corresponding to the imaging request.

10. A recording medium recording at least one of the installation simulation program of claim 7, the operation simulation program of claim 8 and the imaging simulation program of claim 9.
